(19)

Europäisches
Patentamt
European
Patent Office
Office européen
des brevets

(11) **EP 4 726 479 A1**

(12) **EUROPEAN PATENT APPLICATION**

(43) Date of publication:
**15.04.2026 Bulletin 2026/16**

(21) Application number: **24206307.1**

(22) Date of filing: **14.10.2024**

(51) International Patent Classification (IPC):
***G05B 13/02*** (2006.01)

(52) Cooperative Patent Classification (CPC):
**G05B 13/024**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Volvo Truck Corporation
405 08 Göteborg (SE)**

(72) Inventor: **Bakhshi, Masoud
414 76 Gothenburg (SE)**

(74) Representative: **Valea AB
Box 1098
405 23 Göteborg (SE)**

(54) **SYSTEM AND METHOD FOR HANDLING A REQUEST FOR AN INPUT PARAMETER FROM A CONTROLLER**

(57) This disclosure relates to a computer system (800) for handling a reference parameter from a controller (105), wherein the reference parameter is associated with operation of a machine (103) arranged to be controlled by the controller (105). The computer system (800) comprising processing circuitry (802) configured to:
• receive the reference parameter from the controller (105);
• determine an output parameter based on the reference parameter;
• compare the determined output parameter with an output parameter limit; and to
• when a result of comparison indicates that the determined output parameter exceeds the output parameter limit, determine a new output parameter based on the reference parameter and a present availability of a resource at the controller (105).

100

**Fig. 1**

EP 4 726 479 A1

**Description**

**TECHNICAL FIELD**

The disclosure relates generally to a computer system, a computer-implemented method, a computer program product and a non-transitory computer-readable storage medium. In particular aspects, the disclosure relates to handling a request for an input parameter from a controller. The disclosure can be applied to heavy-duty vehicles, such as trucks, buses, and construction equipment, among other vehicle types. Although the disclosure may be described with respect to a particular vehicle, the disclosure is not restricted to any particular vehicle.

**BACKGROUND**

When a vehicle starts to accelerate from a standstill, starting uphill or any other sudden requests, a controller may request several hundred volts or torque, depending on the type of controller used, e.g. speed or current controller. However, if there is a lack of available voltage, the controller may become saturated and lose controllability. This could also lead to windup, causing oscillations and long settling times. It is important to protect the controller from saturation to avoid these issues.

To prevent the controller from requesting more voltage or torque than is available and causing saturation, a limiter is often used in the controller's output, which causes saturation, too. In some cases, anti-windup techniques are used to protect the controller from saturation. However, even with these techniques, saturation can still occur in practice.

In view of the above, there is a striving to develop further improved technology relating to avoiding saturation in a controller while maintaining the controllability of the controller.

**SUMMARY**

According to the first aspect of the disclosure, a computer system for handling a reference parameter from a controller is provided. The reference parameter is associated with the operation of a machine arranged to be controlled by the controller. The computer system comprises processing circuitry configured to:

- receive the reference parameter from the controller;
- determine an output parameter based on the reference parameter;
- compare the determined output parameter with an output parameter limit and to
- when a result of comparison indicates that the determined output parameter exceeds the output parameter limit, determine a new output parameter based on the reference parameter and a present availability of a resource at the controller, wherein the resource is associated with the reference parameter.

The first aspect of the disclosure may seek to provide improved handling of the reference parameter from the controller. A technical benefit may include that the handling of the reference parameter from the controller is improved. The disclosure enables linear acceleration and eliminates the risk of saturation. The new output parameter is determined to reduce the reference parameter to the one that is approachable based on available resources, e.g. availability of the resource at the controller, which results in a reduced risk for saturation or that the saturation is removed completely. The resource may be associated with the reference parameter in that the resource and the parameter in the term reference parameter may be the same. For example, the resource is current when the reference parameter is reference current. In another example, the resource is voltage when the reference parameter is a reference voltage. The determined output parameter is processed by comparing it to an output parameter limit and adjusting if necessary by determining a new reference parameter, which at the end results in linear acceleration. The output parameter limit may be based on the availability of the resource at the controller. Since the new output parameter does not exceed the output parameter limit, the risk for the controller becoming saturated is reduced or even mitigated. The disclosure achieves linear acceleration in the machine, in addition to having a robust controller without saturation issues. This will enable almost identical acceleration times for all produced vehicles, regardless of tolerances in vehicle manufacturing. The disclosure has a fast settled time, i.e. response time, and it provides controllability of the machine at almost any reference parameter compared to an anti-windup technique, for instance.

The disclosure improves the controller's availability for all resources, preventing it from entering the saturation area. This means the controller can take responsibility for and protect the vehicle under many circumstances.

With the disclosure, power switching devices will no longer be overestimated. For example, instead of selecting a 900A IGBT when a 600A IGBT is needed to account for overcurrent during saturation, a more tailor made device may be selected having only the necessary requirements. Additionally, by reducing harsh operating conditions such as high overcurrent, the lifetime of power devices will be increased. Furthermore, it is possible to operate safely in variable fundamental frequencies and bandwidths. Moreover, the driving range will be extended because there will be no overshoots and less dissipation.

Optionally, in some examples, including at least one preferred example, the processing circuitry may be further configured to trigger the controller to apply the new output parameter.

A technical benefit may include improved handling of the reference parameter from the controller.

Optionally, in some examples, including at least one preferred example, the processing circuitry may be further configured to trigger the controller to apply the output parameter when a comparison result indicates that the determined output parameter does not exceed the output parameter limit.

A technical benefit may include the fact that it is not necessary to determine and/or use the new output parameter. The determined output parameter may be applied without risking saturation in the controller since it does not exceed the output parameter limit.

Optionally in some examples, including in at least one preferred example, the new output parameter may be determined based on the reference parameter and the present availability of the resource at the controller in each sample time.

A technical benefit may include that handling of the reference parameter from the controller is improved. Determining the new output parameter in each sample ensures that the available resources are not exceeded and maintains continuous controllability.

Optionally in some examples, including in at least one preferred example, wherein the reference parameter may be one of: a reference speed, a reference voltage, a reference current and a reference torque. The determined output parameter may be one of: an output speed, an output voltage, an output current and an output torque. The output parameter limit may be one of: output speed limit, an output voltage limit, an output current limit and an output torque limit. The new output parameter may be at least one of: a new output speed, a new output voltage, a new output current and a new output torque. The resource may be at least one of: speed, voltage, current and torque.

A technical benefit may include that handling of the reference parameter from the controller is improved.

Optionally in some examples, including in at least one preferred example, the output parameter limit may comprise a range. The range may comprise a minimum output parameter limit and a maximum output parameter limit of the controller.

A technical benefit may include that the output parameter limit may be tailored to the specific machine that should operate on the determined output parameter or the new output parameter so that the operation is as optimal as possible, reduces the risk for saturation to a highest possible degree and to ensure linear acceleration of the vehicle.

Optionally in some examples, including in at least one preferred example, the controller may be a Proportional Integral (PI) controller or a Proportional Integral Derivative (PID) controller.

A technical benefit may include that handling of the reference parameter from the controller is improved.

Optionally in some examples, including in at least one preferred example, the controller may be one of: a torque controller, a speed controller, a current controller, a voltage controller, a position controller and a field weakening controller.

A technical benefit may include that handling of the reference parameter from the controller is improved.

Optionally in some examples, including in at least one preferred example, the machine arranged to be controlled by the controller may be comprised in a vehicle or an industrial machine.

A technical benefit may include that handling of the reference parameter from the controller is improved. When the handling of the reference parameter is improved, the risk for saturation in the controller is reduced or even mitigated. The reduced risk for saturation or the mitigation of the saturation improves efficiency of the vehicle, it ensures that the vehicle can operate closer to its optimal efficiency, it reduces energy efficiency, minimizes the need for maintenance and improves performance, just to mention some examples.

According to a second aspect of the disclosure, a vehicle comprising the computer system of the first aspect is provided. The second aspect of the disclosure may seek to provide improved handling of the reference parameter from the controller. A technical benefit may include that the handling of the reference parameter from the controller is improved.

The technical benefits of the second aspect are largely analogous to the technical benefits of the first aspect. It shall also be noted that all examples of the first aspect are combinable with all examples of the second aspect, and vice versa.

According to a third aspect of the disclosure, a computer-implemented method for handling a reference parameter from a controller is provided. The reference parameter is associated with the operation of a machine arranged to be controlled by the controller. The method comprises:

- receiving, by processing circuitry of a computer system, the reference parameter from the controller;
- determining, by the processing circuitry, an output parameter based on the reference parameter;
- comparing, by the processing circuitry, the determined output parameter with an output parameter limit; and
- when a result of the comparison indicates that the determined output parameter exceeds the output parameter limit, determining, by the processing circuitry, a new output parameter based on the reference parameter and present availability of a resource at the controller, wherein the resource is associated with the reference parameter.

The third aspect of the disclosure may seek to provide improved handling of the reference parameter from the controller. A technical benefit may include that the handling of reference parameters from the controller is improved.

Optionally in some examples, including in at least one preferred example, the method may further comprise:

- triggering, by the processing circuitry, the controller to apply the new output parameter.

Optionally in some examples, including in at least one preferred example, the method may further comprise:

- triggering, by the processing circuitry, the controller to apply the determined output parameter when a result of comparison indicates that the determined output parameter does not exceed the output parameter limit.

Optionally in some examples, including in at least one preferred example, the new output parameter may be determined based on the reference parameter and the present availability of the resource at the controller in each sample time.

Optionally in some examples, including in at least one preferred example, the reference parameter may be one of: a reference speed, a reference voltage, a reference current and a reference torque. The output parameter may be one of: an output speed, an output voltage, an output current and an output torque. The output parameter limit may be one of: an output speed limit, an output voltage limit, an output current limit and an output torque limit. The new output parameter may be at least one of: a new output speed, a new output voltage, a new output current and a new output torque. The resource may be at least one of: speed, voltage, current and torque.

Optionally in some examples, including in at least one preferred example, the output parameter limit may comprise a range comprising a minimum output parameter limit and a maximum output parameter limit of the controller.

Optionally in some examples, including in at least one preferred example, the controller may be a PI controller or a PID controller.

Optionally in some examples, including in at least one preferred example, the controller may be one of: a torque controller, a speed controller, a current controller, a voltage controller, a position controller and a field weakening controller.

Technical benefits of the third aspect are largely analogous to the technical benefits of the first and second aspects. It shall also be noted that all examples of the first and second aspects are combinable with all examples of the third aspect, and vice versa.

According to a fourth aspect of the disclosure, a computer program product is provided. The computer program product comprises program code for performing, when executed by a processing circuitry, the method of the third aspect.

The fourth aspect of the disclosure may seek to provide improved handling of the reference parameter from the controller. A technical benefit may include that the handling of reference parameter from the controller is improved.

Technical benefits of the fourth aspect are largely analogous to the technical benefits of the first, second and third aspects. It shall also be noted that all examples of the first, second and third aspects are combinable with all examples of the fourth aspect, and vice versa.

According to a fifth aspect of the disclosure, a non-transitory computer-readable storage medium is provided. The non-transitory computer-readable storage medium comprises instructions, which when executed by a processing circuitry, cause the processing circuitry to perform the method of the third aspect.

The fifth aspect of the disclosure may seek to provide improved handling of the reference parameter from the controller. A technical benefit may include that the handling of reference parameter from the controller is improved.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

**FIG. 1** is an exemplary drawing illustrating a vehicle, according to an example.
**FIG. 2** is a flow chart of an exemplary method, according to an example.
**FIG. 3** are diagrams illustrating simulations, according to an example.

**FIG. 4** are diagrams illustrating simulations, according to an example.
**FIG. 5** are diagrams illustrating simulations, according to an example.
**FIG. 6** is another view of **FIG. 1,** according to an example.
**FIG. 7** is a flow chart of an exemplary method, according to an example
**FIG. 8** is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

When a vehicle starts to accelerate from a standstill or any other sudden requests, a controller may request several hundred volts or torque, depending on the type of controller used, e.g. speed or current controller. However, if there is a lack of available Direct Current (DC)-Link voltage, the controller may become saturated and lose controllability. This could also lead to windup, causing oscillations and long settling times. It is important to protect the controller from saturation to avoid these issues.

To prevent the controller from requesting more voltage or torque than is available and causing saturation, a limiter is often used in the controller's output, which is causing saturation too. In some cases, anti-windup techniques are used to protect the controller from saturation. However, even with these techniques, saturation can still occur in practice.

In view of the above, there is a strive to develop further improved technology relating to avoiding saturation in a controller.

It is beneficial to achieve linear acceleration in an electric machine, especially when it is connected to a truck, in addition to having a robust controller without saturation issues. This will enable almost identical acceleration times for all the vehicles produced. None of the current solutions nowadays can handle both concerns once, even if they are not providing complete solutions for saturation problems in practice. The present disclosure provides a complete solution for both concerns as a package. The present disclosure provides fast settled time, i.e. respond time, and controllability of the machine at almost any reference value compared to an anti-windup technique, for instance.

The present disclosure is applicable for all controllers in traction application, for instance, torque controller, speed controller, and current controller. The present disclosure is also applicable to any industrial machine.

The present disclosure ensures complete protection against controller saturation in practice. This guarantees the controller's availability for all resources, preventing it from entering the saturation area. This means that the controller can take responsibility for and protect the system under all circumstances. High-current components like IGBTs/Sic Mosfets also benefit from this, causing fewer spikes, surges, and overshoots. This improvement in durability is expected to occur. In addition to preventing saturation, the present disclosure also enables linear acceleration. In other words, no separate solution for linear acceleration is necessary since the present disclosure enables both linear acceleration and prevents saturation.

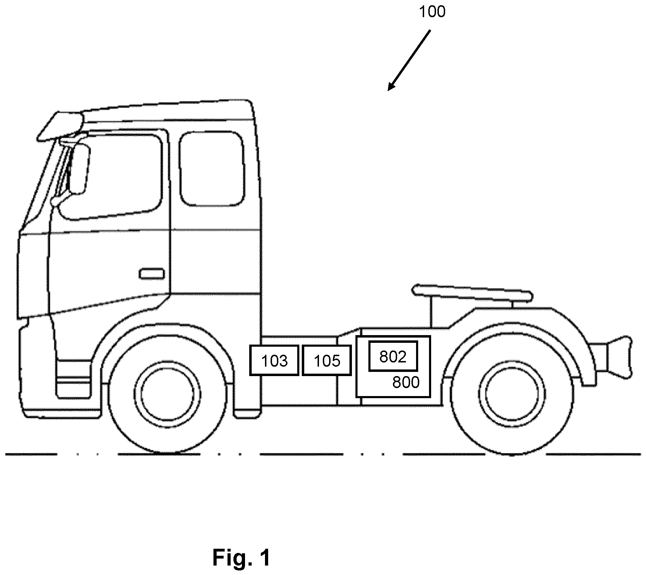

FIG. 1 is an exemplary drawing illustrating a vehicle **100,** according to an example. The vehicle **100** is a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle **100** may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle **100** may be operated by a user (not shown) and/or be at least partly automatically driven, i.e., it may be a vehicle comprising autonomous driving capabilities. The user may be a driver of the vehicle **100.**

The vehicle **100** may be a fully electric vehicle or a hybrid vehicle. The vehicle **100** may comprise at least one electric motors/generators and/or an internal combustion engine (not shown) for driving the vehicle **100.** The term vehicle will be used herein when referring to any of the above types of vehicles.

The vehicle **100** comprises at least one machine **103.** Using other words, the vehicle **100** comprises *n* machines **103,** where *n* is a positive integer. The term machine **103** will be used herein when referring to the *n* machines **103.** The machine **103** may be an electric machine. The machine **103** may be associated with the vehicle's propulsion system, the vehicle's braking system etc. The machine **103** may be an electric motor arranged to convert electric energy into mechanical energy to drive the wheels of the vehicle **100,** it may be a generator arranged to convert mechanical energy into electrical energy to charge a battery comprised in the vehicle **100,** it may be a generator arranged to convert kinetic energy into electric energy during regenerative braking, just to mention some examples. The machine **103** may function as both an electric motor and a generator. The machine **103** may be any type of electric machine used in traction applications, such as vehicles, boats, and trains. In other words, the machine **103** may not only be applicable to vehicles. The machine **103** may be any type of machine, for example Surface mounted Permanent Magnet synchronous machine (SPM), Interior Permanent Magnet (IPM) machine, Induction Motor (IM) machine, etc.

The vehicle **100** comprises a controller **105.** The controller **105** is arranged to control a function of the vehicle **100,** in particular for example a function of the machine **103.** The function may be associated with for example torque, speed, current, voltage etc. Torque, speed, current and voltage may be examples of resources available to the controller **105.**

The controller **105** may be, for example, a PI controller or a PID controller. Both the PI controller and PID controller are types of feedback control units and are arranged to control functions in, for example, the vehicle **100,** an industrial machine in any other industrial application, etc. The PI controller comprises a proportional component and an integral component. The proportional component reacts to current error, the integral component is associated with accumulated errors. The PID controller comprises the proportional component, the integral component and a derivative component. The proportional and integral components of the PID controller are the same as for the PI controller. The derivative components are related to prediction of future errors. A difference between the PI controller and the PID controller is that the PI controller does not comprise the derivative part of the PID controller. The PI controller is well-suited for systems where speed and accuracy are important, but where precis and fast response control are not required. The PID controller is well-suited for systems requiring precis control and fast response to error changes. The controller **105** may be used in automotive and industrial applications.

The controller **105** may be one of:

- a torque controller,
- a speed controller,
- a current controller,
- a voltage controller,
- a position controller and
- a field weakening controller, and
- any other high bandwidth controller.

The bandwidth of the controller **105,** along with the sensors used for feedback, determine the achievable quality of control. In order to use high bandwidth controllers, a robust system first needs to be created. This disclosure ensures that the system may operate at high bandwidth without any issues. As power switch technology evolves, such as the use of Sic Mosfets, it is possible to increase the switching frequency to higher levels than before. For example, it is possible to move from 10KHz to 60KHz. With this increase in switching frequency, it is possible to enhance the bandwidth of the controller **105,** allowing for more precise control of the machine **103.**

Even though the controller **105** is described herein to be comprised in a vehicle **100,** the controller **105** may equally be comprised in any industrial machine, for example tier manufacturing machines, train propulsion systems, aircrafts, just to mention some examples.

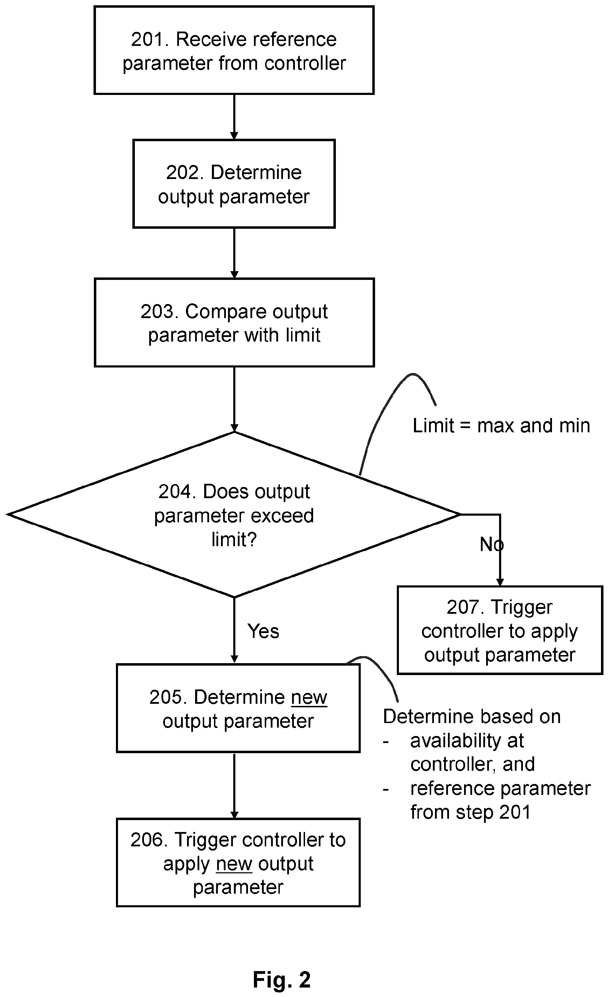

FIG. 2 is a flow chart of an exemplary method, according to an example. The method may be performed by a computer system **400** or a processing circuitry **402** comprised in the computer system **400.** The computer system **400** may be located onboard the vehicle **100** or offboard the vehicle **100.** The computer system **400** may be comprised in the controller **105,** i.e. the method may be described as being performed by the controller **105.** The method comprises at least one of the following steps, which steps may be performed in any suitable order than described below.

Step **201:** A reference parameter is received from the controller **105.** The reference parameter may be a reference speed, a reference voltage, a reference torque, just to mention some examples. The reference parameter may be referred to as an input parameter, a reference input parameter, a requested reference parameter, a requested parameter or a first parameter. The reference parameter may be associated with a resource such as for example speed, voltage, current and torque, just to mention some examples. The controller **105** wants to control operation of the machine **103** using the reference parameter, i.e. the reference parameter is requested by the controller **105.** For example, when starting to accelerate the vehicle **100** from standstill, the controller **105** may request a certain number of volts to be applied to the machine **103.** The number of volts requested by the controller **105** is the reference parameter in this example. If the requested amount of voltage is not available at the DC-link, the controller **105** may become saturated and lose controllability. To avoid this, at least one of the following steps is performed. Note that the number of volts is only an example, and that other types of reference parameters are equally applicable.

Step **202:** An output parameter is determined based on the reference parameter that was received in step **201.** The output parameter may be determined using any suitable method. The output parameter determined in step **202** may be referred to as a first output parameter or a second parameter. The output parameter is to be output by the controller **105,** according to the reference parameter. However, this determined output parameter does not take the availability of the resource at the controller **105** into account. The determined output parameter may therefore exceed the availability of the resource at the controller **105,** which may lead to saturation. In order to avoid this, at least one of steps 203-206 is performed.

Step **203:** The output parameter that was determined in step **202** is compared with an output parameter limit. The output parameter limit may be based on the availability of the resource at the controller **105,** for example the availability of at least one of: speed, voltage, current and torque. The output parameter limit may be predetermined. The output parameter may be fixed or it may be continuously and dynamically changed when necessary.

Step **204:** A check is done to determine if a result of the comparison in step **203** indicates that the determined output parameter exceeds the output parameter limit. The output parameter limit may be an output parameter range comprising a maximum output parameter and a minimum output parameter. The determined output parameter may be either inside or outside the range. If the determined output parameter exceeds the output parameter limit, as indicated with "yes" in **FIG. 2,** the method proceeds to step **205.** If the determined output parameter does not exceed the output parameter limit, as indicated with "no" in **FIG. 2,** the method proceeds to step **207.**

For example, the output parameter range may comprise max 800 Volts and minimum -800 Volts.

Steps **203** and **204** may comprise at least one of equations (4), (8), (9), (10), (11), and (12) below.

Step **205:** This step may be performed if the determined output parameter exceeds the output parameter limit. A new output parameter is determined if the determined output parameter exceeds the output parameter limit. The new output parameter is not determined when the result of comparison indicates that the determined output parameter does not exceed the output parameter limit. The output parameter determined in step **205** may be a second output parameter or a third parameter. The new output parameter may be a new reference parameter. The new output parameter may be a new reference parameter that is within the output parameter limit and that takes the availability of the reference into account. A new output parameter may be such that it does not exceed what is available to the controller **105,** i.e. the availability of the resource such as for example voltage, current, speed and torque. The resource may be associated with at least one of: the reference parameter and the output parameter. The new output parameter may be re-determined or recalculated at every sample time until we reach the original reference parameter from step **201.** The new output parameter is determined to be one that does not exceed the output parameter limit, e.g. that is within the output parameter range.

For example, if the output parameter of 1500 Volts is outside the output parameter range of 800-(-800) Volts, then the new reference value will be determined to keep the output below 800 Volts.

For instance, if the reference parameter is a reference current of 600 amperes and the vehicle **100** is at a standstill, for instance, the available voltage to controller **105** may be 800 volts, then the output of the controller **105** should not exceed 800 volts. The requested reference current may be adjusted to a value that finally can reach 600A based on the available voltage. This adjustment will ensure that the reference current reaches the desired 600A as quickly as possible without requiring a voltage higher than 800 volts. During the mentioned controlling time, saturation will not be touched; then there will be controllability in every step.

If the present availability of the resource is higher than the reference parameter, then the output parameter may be determined to be the same as the reference parameter. If the present availability of the resource is lower than the reference parameter, then the output parameter may be determined to be below the same as or below what is presently available. If the controller's requested voltage, for instance, is lower than the available DC-Link, it will allow the controller to work normally and will not modify the reference current.

In the example where the reference parameter is a reference voltage, then the present availability of resource being a voltage may be an online value of the battery status, which also shows the battery voltage. Information indicating the present availability of voltage may be obtained through CAN signal. There may be a voltage sensor on the DC-Link, which may directly measure the amplitude of traction voltage which shows the voltage limit, i.e. a direct measurement. For the examples where the reference parameter is a reference torque or reference speed, there may be mapping and calculations which calculates limits online based on current situation of the system.

The new output parameter may comprise one or two parts, for example both a new output speed and a new output torque. The two parts may comprise a first new output parameter and a second new output parameter. See Table 1 for more examples.

Step **205** may be repeated until the reference parameter from step **201** is reached.

Step **205** may comprise at least one of equations (10), (11) and (12) below.

Step **206:** The controller **105** is triggered to apply the new output parameter. The triggering may comprise to send instructions to the controller **105** to apply the new output parameter, e.g. the second output parameter. The instructions may comprise information indicating the new output parameter. Consequently, the controller **105** applies the new output parameter in its control of the machine **103.** The new output parameter does not exceed the output parameter limit and takes the reference parameter and the availability of the resource into account. Thus, saturation is avoided, and linear acceleration is achieved.

Step **207:** This step is performed if the determined output parameter does not exceed the output parameter limit. For example, if the controller's requested output value, for instance, is lower than what is available on the DC-Link, it will allow the controller **103** to work normally and will not modify the reference current.

The controller **105** is triggered to apply the output parameter that was determined in step **202,** e.g. the first output parameter. The triggering may comprise to send instructions to the controller **105** to apply the determined output parameter. The instructions may comprise information indicating the output parameter. Consequently, the controller **105** applies the output parameter in its control of the machine **103.**

An overview of some examples of the controller **105,** the reference parameter, the output parameter, the output parameter limit and the new output parameter is provided in Table 1 below. For example, when the reference parameter is a reference speed, then the output parameter is output torque, the output parameter limit is an output torque limit, and the new output parameter is a new output speed and a new output torque. The type of parameter is dependent on the type of controller **105.**

Table 1

| Controller | Reference parameter | Output parameter | Output parameter limit | New output parameter |
|---|---|---|---|---|
| Speed controller | Reference speed | Output Torque | Output Torque limit | New Reference Speed and Output Torque |
| Voltage controller | Reference voltage | Output current | Output Current limit | New Reference Voltage and Output Current |
| Current controller | Reference current | Output voltage | Output Voltage limit | New Reference Current and Output Voltage |
| Torque controller | Reference torque | Output current | Output Current limit | New Reference Torque and Output Current |

Below is a list with an overview of the different terms that may be used for the different parameters:

- Reference parameter:

    ○ Input parameter
    ○ Reference input parameter
    ○ Requested reference parameter
    ○ Requested parameter
    ○ Requested input
    ○ First parameter

- Output parameter:

    ○ First output parameter.
    ○ Second parameter

- New output parameter:

    ○ second output parameter
    ○ Third parameter

The method described herein will now be described using a PI controller as an example. Note that the method is equally applicable to any other controller, as mentioned earlier.

The present disclosure comprises implementing the code into the PI controller differential equation instead of using a limiter block in the controller's output.

A transfer function of a complex vector synchronous frame PI controller may be:

$$W_{(S)} = K_p * (1 + \frac{1 + j\omega t}{St}) \qquad (1)$$

$$t = \frac{K_p}{K_i} \qquad (2)$$

, where $W_{(s)}$ represents the transfer function in the Laplace domain $K_p$ represents the proportional gain of the system, $j$ represents the imaginary unit, $\omega$ represents the angular frequency, $t$ represents a time constant, $S$ represents the Laplace transform variable and $K_i$ represents an integral gain.

After using Tustin digitalization method ( $S = \frac{2}{T}\frac{(Z-1)}{(Z+1)}$ where $T = \frac{1}{F_{sw}}$ ) we have:

$$W_{(z)} = \frac{(K_p + K_i\frac{T}{2} + K_p\, j\omega\frac{T}{2})z + (-K_p + K_i\frac{T}{2} + K_p\, j\omega\frac{T}{2})}{z-1} \qquad (3)$$

, where T represents the sampling period, $F_{sw}$ represents the switching frequency, z represents the z-domain. Note that capital T represents the sampling period which is equal to 1/ $F_{sw}$, while the lower case t represents a time constant.

Note that the Tusting digitalization method is only an example, and that any other suitable digitalization method can be used, for example Eurler's Method, Zero-Order Hold (ZOH) and Frist-Order Hold (FOH).

The differential equation to use in the controller 105 may be:

$$V_{dq} = V_{dq-1} + K_1 . ek + K_2 . ek_{-1} \qquad (4)$$

So that:

$$K_1 = K_p + K_i\frac{T}{2} + K_p\, j\omega\frac{T}{2} \qquad (5)$$

$$K_2 = -K_p + K_i\frac{T}{2} + K_p\, j\omega\frac{T}{2} \qquad (6)$$

$ek_{-1}$= Previous error and $ek$ = error

$$V_{dq} = V_{dq-1} + K_1 . ek + K_2 . ek_{-1} \qquad (7)$$

$$\text{if } V_{dq} > V_{dq-Higher\ Limit} \qquad (8)$$

Or -----4 to check the limits defined for the controller 105.

$$\text{if } \quad V_{dq} < V_{dq-Lower\ Limit} \qquad (9)$$

$$ek = \frac{V_{dq} - V_{dq-1} - K_2.ek_{-1}}{K_1} \qquad (10)$$

$$i_{dq}{}^* = i_{dq} + ek \qquad (11)$$

$$ek_{-1} = ek \qquad (12)$$

[0089] , where $i_{dq}$ represents the measured dq-axis current and $i_{dq}{}^*$ represents the reference dq-axis current.

A new output parameter $i_{dq}{}^*$, e.g. a new reference current, may be determined in case the controller **105** exceeds the higher limit $V_{dq-Higher\ Limit}$ or the lower limit $V_{dq-Lower\ Limit}$. Thus, linear acceleration will be obtained.

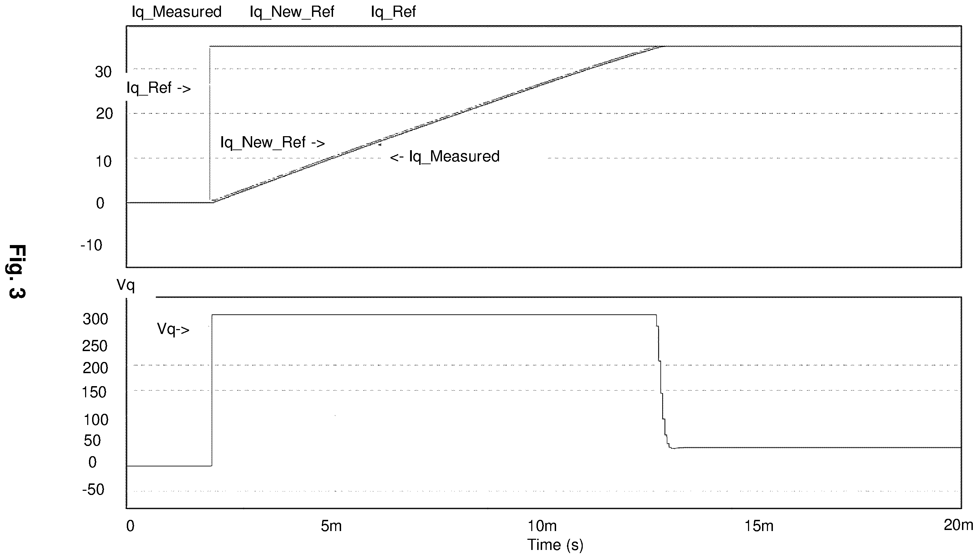

Some simulations of control of machine **103** will now be described with reference to **FIG. 3, FIG. 4** and **FIG. 5. FIG.**

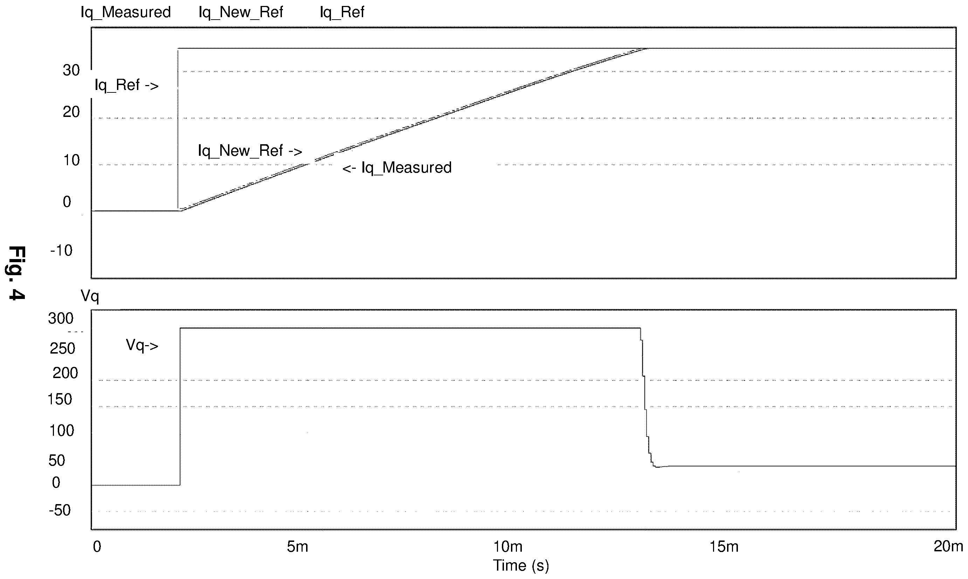

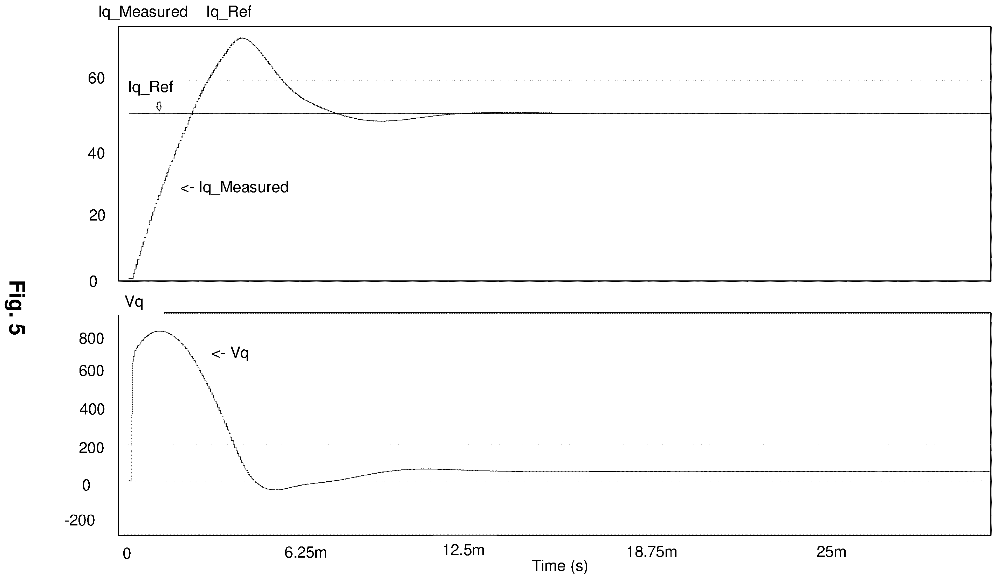

**3** and **FIG.4** both illustrate simulations using the present disclosure. **FIG. 5** illustrates a simulation without the present disclosure.

**FIG. 3** is similar to **FIG. 4,** but with a different bandwidth to demonstrate that the response time is almost the same in different fundamental frequencies and bandwidths. **FIG. 3** and **FIG. 4** show the performance of the present disclosure at both higher and lower fundamental frequencies and bandwidths. The simulations in **FIG. 3** and **FIG. 4** are based on the same parameters, except for the parameter $BW_i$ and fundamental frequency. $BW_i$ is 500Hz in the simulation **in FIG. 3** and 1000Hz in the simulation in **FIG. 4.**

fundamental frequency is 500Hz in the simulation illsutrated in **FIG. 3** and 200Hz in the simulation in **FIG. 4.**

Both **FIG. 3** and **FIG. 4** show four lines, i.e. graphs. Three lines in the top diagram and one graph in the bottom diagram. In the top diagram of both **FIG. 3** and **FIG. 4,** there is one line representing the reference q-axis current, one line representing the newly calculated reference current, and one line representing the measured q-axis current. The line in the bottom diagram of both **FIG. 3** and **FIG. 4** represents the output of the controller **105,** which should not exceed 300 volts, as defined. Almost 35A is applied as the Iq_Ref (reference q-axis current), and the controller **105** tries to output high voltage to quickly reach the reference current. However, there is a voltage limitation of 300 volts, so it is not desired to exceed this limit. It may also be possible to ensure control at every sampling time. Therefore, the reference current (Iq_New_Ref) may be recalculated to ensure it does not exceed the defined voltage limitation. It gradually increases the reference current based on available voltage to reach the Iq_Ref.

A simulation of a machine **103** exemplified by a Permanent Magnet Synchronous Motor (PMSM) motor being controlled by a controller **103** exemplified by a complex vector synchronous frame PI current controller utilizing the method disclosed herein is illustrated in **FIG. 3.** The simulation is done based on the following parameters:

- $F_{sw}$=20KHz
- $L_q$=$L_d$ =0.0158H
- R=0.53$\Omega$
- $T_L$=10N.m
- $BW_i$ =$500Hz,$
- $V_{dq\text{-Higher Limit}}$=300
- $V_{dq\text{-Lower Limit}}$=-300

**FIG. 3** shows four graphs, i.e. three graphs in the top diagram and one graph in the bottom diagram. The simulation in **FIG.3** is for a bandwidth of 500Hz and a fundamental frequency of 500 Hz. The x-axis of the top diagram in **FIG.3** represents time measured in seconds and the y-axis represents current, i.e. Iq which represents the current in the quadrature axis (q-axis). The top diagram in **FIG. 3** illustrates three lines illustrating Iq_measured, Iq_new_ref and Iq_ref. Iq_measured is determined by a current sensor, i.e. the measured q-axis current. Iq_new_ref is an example of the new output parameter determined in step **205** in **FIG. 2,** i.e. the newly calculated reference current. Iq_refis an example of the reference parameter received in step **201** of **FIG. 2,** i.e. the reference q-axis current.

The graph in the bottom diagram in **FIG. 3** represents the output of the controller **105** which does not exceed 300Volts, as defined for it. The x-axis of the bottom diagram in **FIG. 3** represents time measured in seconds and the y-axis represent voltage, i.e. Vq which represents the voltage applied along the q-axis. The bottom diagram illustrates one line representing Vq. A simulation of a machine **103** exemplified by a PMSM motor being controlled by a controller **103** exemplified by a synchronous frame PI current controller utilizing the method disclosed herein is illustrated in **FIG. 4.** The simulation is done based on the following parameters:

- $F_{sw}$=20KHz
- $L_q$=$L_d$ =0.0158H
- R=0.53$\Omega$
- $T_L$=10N.m
- $BW_i$ =1000Hz
- $V_{dq\text{-Higher Limit}}$=300
- $V_{dq\text{-Lower Limit}}$=-300

**FIG. 4** shows four graphs, i.e. three graphs in the top diagram and one graph in the bottom diagram. The x-axis of the top diagram in **FIG.4** represents time measured in seconds and the y-axis represents current, i.e. Iq which represents the current in the quadrature axis (q-axis). The top diagram in **FIG. 4** illustrates three lines illustrating Iq_measured, Iq_new _ref and Iq_ref. Iq_measured is determined by a current sensor. Iq_new _ref is an example of the new output parameter determined in step **205** in **FIG. 2.** Iq_ref is an example of the reference parameter received in step **201** of **FIG. 2.**

The x-axis of the bottom diagram represents time measured in seconds and the y-axis represent voltage, i.e. Vq which represents the voltage applied along the q-axis. The bottom diagram illustrates one line representing Vq.

**FIG. 5** is a simulation of a machine **103** exemplified by a PMSM motor being controlled by a controller **103** exemplified by a PI current controller without utilizing the method disclosed herein. The simulation in **FIG. 5** is for a bandwidth of 200Hz and a frequency of 50Hz. The x-axis of the top diagram in **FIG. 5** represents time measured in seconds and the y-axis represents current, i.e. Iq. Both the top and the bottom diagram illustrates two lines, one line for the Iq_Measured_PI which is an example of a parameter applied and outputted by the controller **103 a**nd one line for the Iq_Ref_PI which is an example of the reference parameter received in step **203** in **FIG. 2.**

From **FIG. 5,** it can be observed that it takes a long time to rach the reference time, and that saturation will occur as the value is not limited to 300V. It requires around 800V, which will cause saturation when it requests more than 300V. This will affect controller performance and response time, both of which will vary with changes in bandwidth and fundamental frequencies. The same issue is present in Id_Measure_PI, where the requested Id_Ref_PI is 5, but the measured value overshoots.

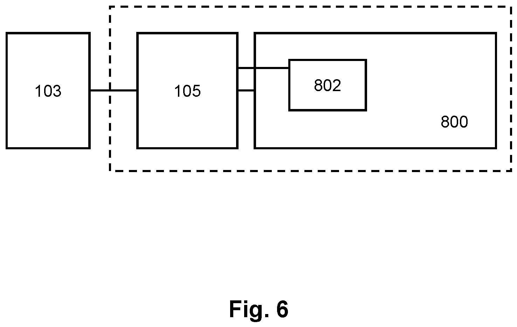

**FIG. 6** is another view of **FIG. 1,** according to an example. **FIG. 6** illustrates a computer system **800** for handling a reference parameter from the controller **105.** The reference parameter is associated with operation of the machine **103** arranged to be controlled by the controller **105.** The computer system **800** comprises processing circuitry **802.**

The controller **105** may be a PI controller or a PID controller.

The controller **105** may be one of: a torque controller, a speed controller, a current controller, a voltage controller, a position controller, a field weakening controller and any other high bandwidth controller in automotive and industrial applications.

The machine **103** arranged to be controlled by the controller **105** may be comprised in a vehicle **100** or an industrial machine.

The computer system **800** may be a standalone system arranged to communicate with the controller **105,** or the computer system **800** may be co-located or comprised in the controller **105,** as illustrated with the dotted box around the controller **105** and the computer system **800.** At least one entity illustrated in **FIG. 6** may be comprised in the vehicle **100** or in the industrial system, i.e. at least one of: the machine **103,** the controller **105,** the computer system **800** and the processing circuitry **802** may be comprised in the vehicle **100** or the industrial system. The computer system **800** may be comprised in the vehicle **100** or in an industrial system, or it may be located offboard the vehicle **100** or the industrial system.

The processing circuitry **802** is configured to receive the reference parameter from the controller **105.** The reference parameter may be one of: a reference speed, a reference voltage, a reference current and a reference torque. The type of reference parameter may be determined by the type of controller **105.**

The processing circuitry **802** is configured to determine an output parameter based on the reference parameter.

The output parameter may be one of: an output speed, an output voltage, an output current and an output torque. The type of output parameter may be determined by the type of controller **105.**

The processing circuitry **802** is configured to compare the determined output parameter with an output parameter limit. The output parameter limit may be based on the present availability of the resource at the controller **105.**

The output parameter limit may be one of: output speed limit, an output voltage limit, an output current limit and an output torque limit. The type of output parameter limit may be determined by the type of controller **105.**

The output parameter limit may comprise a range comprising a minimum output parameter and a maximum output parameter of the controller **105.**

The processing circuitry **802** is configured to determine a new output parameter based on the reference parameter and a present availability of the resource at the controller **105.** The resource is associated with at least one of the reference parameter and the output parameter. The new output parameter is determined when a result of comparison indicates that the determined output parameter exceeds the output parameter limit. The new output parameter is not determined when the result of comparison indicates that the determined output parameter does not exceed the output parameter limit.

The resource may be at least one of: speed, voltage, current and torque. The resource may be associated with the reference parameter in that the resource and the parameter in the term reference parameter and output parameter may be the same. The resource may be associated with the output parameter in that the resource and the parameter in the term output parameter may be the same, and similar for the output parameter. For example, the resource is current when the reference parameter is reference current. In another example, the resource is voltage when the reference parameter is a reference voltage.

The new output parameter may be determined based on the reference parameter and the present availability of the resource at the controller **105** in each sample time.

The new output parameter may be at least one of: a new output speed, a new output voltage, a new output current and a new output torque. The type of new output parameter may be determined by the type of controller **105.**

The processing circuitry **802** may be configured to trigger the controller **105** to apply the new output parameter.

The processing circuitry **802** may be configured to trigger the controller **105** to apply the determined output parameter when a result of comparison indicates that the determined output parameter does not exceed the output parameter limit.

The vehicle **100** may comprise the computer system **800.**

An industrial system may comprise the computer system **800.**

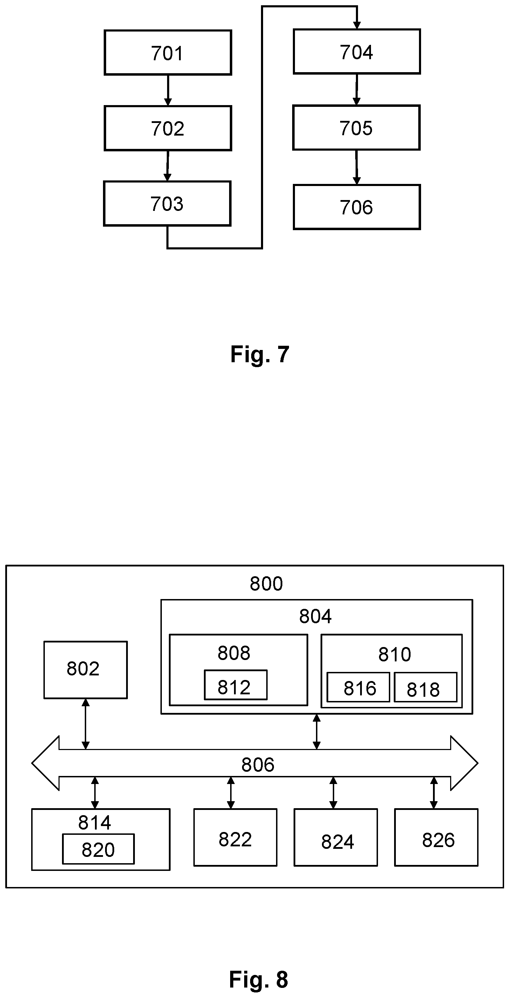

**FIG. 7** is a flow chart of a method for handling a reference parameter from a controller **105** according to an example. The reference parameter is associated with operation of a machine **103** arranged to be controlled by the controller **105.** The controller **105** may be a PI controller or a PID controller. The controller **105** may be one of: a torque controller, a speed controller, a current controller, a voltage controller, a position controller, a field weakening controller and any other high bandwidth controller in automotive and industrial applications.

The method comprises at least one of the following steps, which steps may be performed in any suitable order than described below:

Step **701:** This step corresponds to step **201** in **FIG. 2.** Receiving, by a processing circuitry **802** of the computer system **800,** the reference parameter from the controller **105.**

The reference parameter may be one of: a reference speed, a reference voltage, a reference current and a reference torque.

Step **702:** This step corresponds to step **202** in **FIG. 2.** Determining, by the processing circuitry **802,** an output parameter based on the reference parameter.

The determined output parameter may be one of: an output speed, an output voltage, an output current and an output torque.

Step **702:** This step corresponds to steps **203** and **204** in **FIG. 2.** Comparing, by the processing circuitry **802,** the determined output parameter with an output parameter limit.

The output parameter limit may be one of: an output speed limit, an output voltage limit, an output current limit and an output torque limit.

The output parameter limit may comprise a range comprising a minimum output parameter and a maximum output parameter of the controller **105.**

Step **704:** This step corresponds to step **205** in **FIG. 2.** Determining, by the processing circuitry **802,** a new output parameter based on the reference parameter and on the present availability of the resource at the controller **105.** The new output parameter is determined when a result of comparison indicates that the determined output parameter exceeds the output parameter limit. The resource is associated with at least one of the reference parameter and the output parameter.

The new output parameter may be determined based on the reference parameter and the present availability of the resource at the controller **105** in each sample time.

The resource may be at least one of: speed, voltage, current and torque. The resource may be associated with the reference parameter in that the resource and the parameter in the term reference parameter may be the same, and similar for the output parameter. For example, the resource is current when the reference parameter is reference current. In another example, the resource is voltage when the reference parameter is a reference voltage.

The new output parameter may be at least one of: a new output speed, a new output voltage, a new output current and a new output torque.

Step **705:** This step corresponds to step **206** in **FIG. 2.** Triggering, by the processing circuitry **802,** the controller **105** to apply the new output parameter.

Step **706:** This step corresponds to step **207** in **FIG. 2.** Triggering, by the processing circuitry **802,** the controller **105** to apply the determined output parameter when a result of comparison indicates that the determined output parameter does not exceed the output parameter limit.

A computer program product comprises program code for performing, when executed by the processing circuitry **802,** the method disclosed herein.

A non-transitory computer-readable storage medium comprises instructions, which when executed by a processing circuitry **802,** cause the processing circuitry **802** to perform the method disclosed herein.

**FIG. 8** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of examples 1-20. Each example can be combined with any of the other examples discussed above.

**Example 1:** A computer system 800 for handling a reference parameter from a controller **105,** wherein the reference parameter is associated with operation of a machine **103** arranged to be controlled by the controller **105,** wherein the computer system **800** comprising processing circuitry **802** configured to:

- receive the reference parameter from the controller **105;**
- determine an output parameter based on the reference parameter;
- compare the determined output parameter with an output parameter limit; and to
- when a result of comparison indicates that the determined output parameter exceeds the output parameter limit, determine a new output parameter based on the reference parameter and a present availability of the resource at the controller **105,** wherein the resource is associated with the reference parameter.

**Example 2:** The computer system **800** of example 1, wherein the processing circuitry **802** is further configured to:

- trigger the controller **105** to apply the new output parameter.

**Example 3:** The computer system **800** of any of examples 1-2, wherein the processing circuitry **802** is further configured to:

- trigger the controller **105** to apply the determined output parameter when a result of comparison indicates that the determined output parameter does not exceed the output parameter limit.

**Example 4:** The computer system **800** of any of examples 1-3, wherein the new output parameter is determined based on the reference parameter and the present availability of the resource at the controller **105** in each sample time.

**Example 5:** The computer system **800** of any of examples 1-4, wherein the reference parameter is one of: a reference speed, a reference voltage, a reference current and a reference torque, wherein the output parameter is one of: an output speed, an output voltage, an output current and an output torque, wherein the output parameter limit is one of: output speed limit, an output voltage limit, an output current limit and an output torque limit, and wherein the new output parameter is at least one of: a new output speed, a new output voltage, a new output current and a new output torque.

**Example 6:** The computer system **800** of any of examples 1-5, wherein the output parameter limit comprises a range comprising a minimum output parameter and a maximum output parameter of the controller **105.**

**Example 7:** The computer system **800** of any of examples 1-6, wherein the controller **105** is a PI controller or a PID controller.

**Example 8:** The computer system **800** of any of examples 1-7, wherein the controller **105** is one of: a torque controller, a speed controller, a current controller, a voltage controller, a position controller, a field weakening controller and any other high bandwidth controller in automotive and industrial applications.

**Example 9:** The computer system **800** of any of examples 1-8, wherein the machine **103** arranged to be controlled by the controller **105** is comprised in a vehicle **(100)** or an industrial machine.

**Example 10:** A vehicle **100** comprising the computer system **800** of any of examples 1-9.

**Example 11:** A computer-implemented method for handling a reference parameter from a controller **105,** wherein the reference parameter is associated with operation of a machine **103** arranged to be controlled by the controller **105,** the method comprising:

- receiving **201, 701,** by a processing circuitry **802** of a computer system **800,** the reference parameter from the controller **105;**
- determining **202, 702,** by the processing circuitry **802,** an output parameter based on the reference parameter;
- comparing **203, 204, 703,** by the processing circuitry **802,** the determined output parameter with an output parameter limit; and
- when a result of comparison indicates that the determined output parameter exceeds the output parameter limit, determining **205, 704,** by the processing circuitry **802,** a new output parameter based on the reference parameter and a present availability of the resource at the controller **105,** wherein the resource is associated with the reference parameter.

**Example 12:** The method of example 11, further comprising:

- triggering **206, 705,** by the processing circuitry **802,** the controller **105** to apply the new output parameter.

**Example 13:** The method of any of examples 11-12, further comprising:

- triggering **207, 706,** by the processing circuitry **802,** the controller **105** to apply the determined output parameter when a result of comparison indicates that the determined output parameter does not exceed the output parameter limit.

**Example 14:** The method of any of examples 11-13, wherein the new output parameter is determined based on the reference parameter and the present availability of the resource at the controller **105** in each sample time.

**Example 15:** The method of any of examples 11-14, wherein the reference parameter is one of: a reference speed, a reference voltage, a reference current and a reference torque, wherein the determined output parameter is one of: an output speed, an output voltage, an output current and an output torque, wherein the output parameter limit is one of: an output speed limit, an output voltage limit, an output current limit and an output torque limit, and wherein the new output parameter is at least one of: a new output speed, a new output voltage, a new output current and a new output torque.

**Example 16:** The method of any of examples 11-15, wherein the output parameter limit comprises a range comprising a minimum output parameter and a maximum output parameter of the controller **105.**

**Example 17:** The method of any of examples 11-16, wherein the controller **105** is a PI controller or a PID controller.

**Example 18:** The method of any of examples 11-17, wherein the controller **105** is one of: a torque controller, a speed controller, a current controller, a voltage controller, a position controller, a field weakening controller and any other high bandwidth controller in automotive and industrial applications.

**Example 19:** A computer program product comprising program code for performing, when executed by a processing circuitry **802,** the method of any of examples 11-18.

**Example 20:** A non-transitory computer-readable storage medium comprising instructions, which when executed by a processing circuitry **802,** cause the processing circuitry **802** to perform the method of any of examples 11-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

**1.** A computer system (800) for handling a reference parameter from a controller (105), wherein the reference parameter is associated with operation of a machine (103) arranged to be controlled by the controller (105), wherein the computer system (800) comprising processing circuitry (802) configured to:

receive the reference parameter from the controller (105);
determine an output parameter based on the reference parameter;
compare the determined output parameter with an output parameter limit; and to
when a result of comparison indicates that the determined output parameter exceeds the output parameter limit, determine a new output parameter based on the reference parameter and on a present availability of a resource at the controller (105), wherein the resource is associated with the reference parameter.

2. The computer system (800) of claim 1, wherein the processing circuitry (802) is further configured to:
trigger the controller (105) to apply the new output parameter.

3. The computer system (800) of any of claims 1-2, wherein the processing circuitry (802) is further configured to:
trigger the controller (105) to apply the determined output parameter when a result of comparison indicates that the determined output parameter does not exceed the output parameter limit.

4. The computer system (800) of any of claims 1-3, wherein the new output parameter is determined based on the reference parameter and the present availability of the resource at the controller (105) in each sample time.

5. The computer system (800) of any of claims 1-4,

wherein the reference parameter is one of: a reference speed, a reference voltage, a reference current and a reference torque,
wherein the output parameter is one of: an output speed, an output voltage, an output current and an output torque,
wherein the output parameter limit is one of: output speed limit, an output voltage limit, an output current limit and an output torque limit, and
wherein the new output parameter is at least one of: a new output speed, a new output voltage, a new output current and a new output torque.

6. The computer system (800) of any of claims 1-5, wherein the output parameter limit comprises a range comprising a minimum output parameter and a maximum output parameter of the controller (105).

7. The computer system (800) of any of claims 1-6, wherein the controller (105) is a Proportional Integral, PI, controller or a Proportional Integral Derivative, PID, controller.

8. The computer system (800) of any of claims 1-7, wherein the controller (105) is one of: a torque controller, a speed controller, a current controller, a voltage controller, a position controller and a field weakening controller.

9. The computer system (800) of any of claims 1-8, wherein the machine (103) arranged to be controlled by the controller (105) is comprised in a vehicle (100) or an industrial machine.

10. A vehicle (100) comprising the computer system (800) of any of claims 1-9.

11. A computer-implemented method for handling a reference parameter from a controller (105), wherein the reference parameter is associated with operation of a machine (103) arranged to be controlled by the controller (105), the method comprising:

*receiving* (201, 701), by a processing circuitry (802) of a computer system (800), the reference parameter from the controller (105);
*determining* (202, 702), by the processing circuitry (802), an output parameter based on the reference parameter;
*comparing* (203, 204, 703), by the processing circuitry (802), the determined output parameter with an output parameter limit; and
when a result of comparison indicates that the determined output parameter exceeds the output parameter limit, *determining* (205, 704), by the processing circuitry (802), a new output parameter based on the reference parameter and a present availability of a resource at the controller (105), wherein the resource is associated with the reference parameter.

**12.** The method of claim 11, further comprising:
*triggering* (206, 705), by the processing circuitry (802), the controller (105) to apply the new output parameter.

**13.** The method of any of claims 11-12, further comprising:
*triggering* (207, 706), by the processing circuitry (802), the controller (105) to apply the determined output parameter when a result of comparison indicates that the determined output parameter does not exceed the output parameter limit.

**14.** A computer program product comprising program code for performing, when executed by a processing circuitry (802), the method of any of claims 11-13.

**15.** A non-transitory computer-readable storage medium comprising instructions, which when executed by a processing circuitry (802), cause the processing circuitry (802) to perform the method of any of claims 11-13.

Fig. 1

201. Receive reference parameter from controller

202. Determine output parameter

203. Compare output parameter with limit

Limit = max and min

204. Does output parameter exceed limit?

No

Yes

207. Trigger controller to apply output parameter

205. Determine new output parameter

Determine based on
- availability at controller, and
- reference parameter from step 201

206. Trigger controller to apply new output parameter

Fig. 2

Fig. 3

Fig. 4

**Fig. 5**

**Fig. 6**

**Fig. 7**

**Fig. 8**

| | Europäisches Patentamt European Patent Office Office européen des brevets | **EUROPEAN SEARCH REPORT** | **Application Number** EP 24 20 6307 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 818 187 A (SAVAGE JACK WINDFIELD [US] ET AL) 6 October 1998 (1998-10-06) * column 1, line 39 - line 57 * * column 4, line 1 - column 5, line 62 * ----- | 1-15 | INV. G05B13/02 |
| X | US 10 526 008 B1 (LI HAIBO [US] ET AL) 7 January 2020 (2020-01-07) * column 5, line 36 - column 6, line 9 * ----- | 1-15 | |
| X | US 2017/264231 A1 (KAWANISHI YASUTOMO [JP] ET AL) 14 September 2017 (2017-09-14) * paragraphs [0007] - [0011], [0053] - [0058] * ----- | 1-15 | |
| | | | **TECHNICAL FIELDS SEARCHED (IPC)** G05B H02P |

The present search report has been drawn up for all claims

| Place of search | Date of completion of the search | Examiner |
|---|---|---|
| Munich | 13 March 2025 | Frey, Richard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6307

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | | Publication date | Patent family member(s) | | Publication date |
|---|---|---|---|---|---|
| US 5818187 | A | 06-10-1998 | US | 5818187 A | 06-10-1998 |
| | | | WO | 9637391 A1 | 28-11-1996 |
| US 10526008 | B1 | 07-01-2020 | CN | 110855206 A | 28-02-2020 |
| | | | DE | 102019120566 A1 | 06-02-2020 |
| | | | US | 10526008 B1 | 07-01-2020 |
| US 2017264231 | A1 | 14-09-2017 | CN | 107196582 A | 22-09-2017 |
| | | | EP | 3220537 A2 | 20-09-2017 |
| | | | JP | 6493260 B2 | 03-04-2019 |
| | | | JP | 2017169258 A | 21-09-2017 |
| | | | US | 2017264231 A1 | 14-09-2017 |

EPO FORM P0459

For more details about this annex : see Official Journal of the European Patent Office, No. 12/82